(19) Europäisches Patentamt

European Patent Office

Office européen des brevets

(11) **EP 1 614 588 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(51) Int Cl.:
***B60R 21/01*** *(2006.01)*

(21) Anmeldenummer: **04016272.9**

(22) Anmeldetag: **09.07.2004**

(54) **Überrollerfassungssystem**

Rollover-sensing system

Système de détection du capotage

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(43) Veröffentlichungstag der Anmeldung:
**11.01.2006 Patentblatt 2006/02**

(73) Patentinhaber: **Delphi Technologies, Inc.
Troy, MI 48007 (US)**

(72) Erfinder:
• **Darvish, Abtin
42117 Wuppertal (DE)**
• **Falkner, Markus
53547 Breitscheid (DE)**
• **Haun, Jens, Dr.
44789 Bochum (DE)**

(74) Vertreter: **Manitz, Finsterwald & Partner GbR
Postfach 31 02 20
80102 München (DE)**

(56) Entgegenhaltungen:
**DE-A1- 10 212 963      DE-A1- 19 647 660
DE-A1- 19 961 799      US-A- 5 890 084**

EP 1 614 588 B1

## Beschreibung

Die Erfindung betrifft ein Überrollerfassungssystem für ein Fahrzeug, mit wenigstes einem Sensor zur Erfassung des Drehwinkels des Fahrzeuges und einem Drehratensensor, einer mit den Sensoren verbundenen elektronischen Steuereinrichtung sowie wenigstens einer Sicherheitseinrichtung, die im Fall eines anhand der Sensordaten erfassten Überrollszenarios über die Steuereinrichtung aktivierbar ist.

Bei den bisher bekannten Überrollerfassungssystemen wird jeweils ein einstufiger Fahrzeug-Überrollerfassungsalgorithmus verwendet, d.h. ein Algorithmus, bei dem lediglich zwischen dem Vorliegen eines Überrollszenarios und dem Nichtvorliegen eines solchen Überrollszenarios unterschieden wird. Zu diesen bisher üblichen Fahrzeug-Überrollerfassungsalgorithmen zählt beispielsweise der Algorithmus "WinGAMR2" (Windowed Gyroscope Algorithm Measuring Rollover, version 2). Demzufolge sind die bekannten Algorithmen nicht in der Lage, Überrollszenarios von Beinahe-Überrollszenarios zu unterscheiden.

Eine normale Überrollerfassung basiert auf zwei voneinander unabhängigen Pfaden oder Signalen. Dabei wird der erste Pfad durch ein Ausgangssignal eines Überrollerfassungsalgorithmus gebildet, der auf physikalischen Werten von verschiedenen Sensoren basiert, die in einem Überrollerfassungsmodul vorgesehen sind. Normalerweise umfassen die Sensoren einen Überrollsensor, einen Sensor zur Erfassung der vertikalen Beschleunigung und einen oder zwei Sensoren zur Erfassung der seitlichen Beschleunigung. Die betreffenden physikalischen Daten müssen einer Vorverarbeitung (Filterung) unterzogen werden, bevor sie in dem Erfassungsalgorithmus auf irgendeine mathematische und/ oder physikalische Weise berücksichtigt werden.

Der zweite Pfad kann als "Scharfschaltungs"-Pfad mit grundlegenden Sicherungsalgorithmen betrachtet werden. Damit soll eine versehentliche, auf einen einzelnen Fehler in dem Hauptmikroprozessor des Systems zurückgehende Überrollerfassung und entsprechend ein versehentliche Aktivierung einer betreffenden Sicherheitseinrichtung verhindert werden. Für eine jeweilige Überrollerfassung müssen also stets beide Kriterien, d.h. die Kriterien beider Pfade, erfüllt sein.

Ein wesentliches Erfordernis für einen guten Überrollerfassungsalgorithmus besteht darin, ein Überrollszenario innerhalb einer angemessenen Zeitspanne (einige Zeit vor dem Erreichen des 90°-Überroll- oder Drehwinkels) vorherzusagen. Es ist eine Entscheidung zwischen "Überrollen" in einem Überollszenario und "Kein Überrollen" in einer anderen, normalen Fahrsituation zu treffen.

In bestimmten Fahrsituationen ist die Unterscheidung zwischen "Überrollen" und "Kein Überrollen" jedoch sehr schwierig. Dies liegt u.a. daran, dass in manchen Situationen die empfangenen Signale sehr schwach sind und sich ziemlich langsam entwickeln. Solche Szenarios können zu einem Überrollen führen oder auch nicht.

Überdies treten andere Situationen auf, bei denen, wenn sich die Signale sehr schnell und mit hoher Intensität entwickeln, ein Überrollen eine kurze Zeit später erwartet wird oder das Fahrzeug in seine ursprüngliche Position zurückfällt.

Generell kommt der Sicherheit der Fahrzeuginsassen die höchste Priorität zu. Besteht irgendein Zweifel an der richtigen Entscheidung bzw. ist eine eindeutige Unterscheidung zwischen "Überrollen" und "Kein Überrollen" nicht möglich, so sollten das betreffende Szenario als "Überrollen" erfasst und die Sicherheitseinrichtungen aktiviert werden.

Einige Sicherheitseinrichtungen sind nun irreversibel, was bedeutet, dass sie nach der jeweiligen Aktivierung ersetzt werden müssen. Dies ist natürlich kostenaufwändiger als die Aktivierung reversibler Sicherheitseinrichtungen.

Ein Überrollerfassungssystem mit den Merkmalen des Oberbegriffes des Anspruches 1 ist aus US 5,890,084 bekannt.

Der Erfindung liegt die Aufgabe zugrunde, ein verbessertes Überrollerfassungssystem der eingangs genannten Art zu schaffen, bei dem die zuvor genannten Probleme beseitigt sind. Dabei soll einerseits insbesondere eine optimale Überrollerfassung sowie eine hohe Insassensicherheit gewährleistet sein, während andererseits insbesondere durch die Vermeidung einer unnötigen Aktivierung von reversiblen Sicherheitseinrichtungen ein möglichst kostengünstiges System angestrebt wird.

Die Aufgabe wird mit einem Überrollerfassungssystem mit den Merkmalen des Anspruches 1 gelöst. Unteransprüche sind auf bevorzugte Ausführungsformen gerichtet.

Aufgrund dieser Ausbildung kann bei einer jeweiligen Überrollerfassung also zwischen Stufen unterschiedlichen Schweregrades unterschieden werden. Indem bei der Erfassung von Stufen geringeren Schweregrades reversible Sicherheitseinrichtungen aktiviert werden, die anschließend nicht ersetzt werden müssen, werden die Kosten entsprechend reduziert. Bei solchen Szenarios, bei denen eine eindeutige Unterscheidung zwischen "Überrollen" und "Kein "Überrollen" nicht möglich ist, wird zunächst wenigstens eine Stufe geringeren Schweregrades erfasst. Eine Erfassung von Stufen höheren Schweregrades erfolgt nur dann, wenn sich der Schweregrade des betreffenden Überrollszenarios erhöht. Andernfalls bleibt es bei der Erfassung einer oder mehrerer Stufen geringen Schweregrades, so dass nur reversible Sicherheitseinrichtungen aktiviert werden, was die Kosten entsprechend verringert. Es ist somit einerseits eine optimale Überrollerfassung und Insassensicherheit gewährleistet, während andererseits durch Vermeidung einer unnötigen Aktivierung von irreversiblen Sicherheitseinrichtungen die Kosten reduziert werden.

Bevorzugt unterscheidet die Steuereinrichtung bei der Erfassung eines jeweiligen Überrollszenarios zwischen drei Stufen unterschiedlichen Schweregrades.

Bei einer bevorzugten praktischen Ausführungsform des erfindungsgemäßen Überrollerfassungssystems umfasst die Steuereinrichtung zur Unterscheidung zwischen den Stufen unterschiedlichen Schweregrades eines jeweiligen Überrollszenarios eine adaptive Logik.

Vorteilhafterweise ist wenigstens ein von den Sensordaten abgeleitetes Signal über die adaptive Logik in Abhängigkeit von bestimmten Eigenschaften und/oder dem Verlauf dieses Signals zumindest bereichsweise abänderbar, um die jeweilige Adaption zu bewirken.

Das von den Sensordaten abgeleitete Signal kann beispielsweise repräsentativ für den Verlauf der Drehrate in Abhängigkeit vom Drehwinkel sein.

Vorteilhafterweise ist eine jeweilige Sicherheitseinrichtung aktivierbar, wenn das von den Sensordaten abgeleitete Signal einen vorgebbaren Schwellenwert über- bzw. unterschreitet. Zweckmäßiger ist ein variabler, von dem jeweiligen Drehwinkel und der jeweiligen Drehrate abhängiger Schwellenwert vorgesehen.

Bei einer zweckmäßigen praktischen Ausführungsform des erfindungsgemäßen Überrollerfassungssystems ist eine irreversible Sicherheitseinrichtung jeweils nur dann aktivierbar, wenn der Schwellenwert von einem nicht adaptierten von den Sensordaten abgeleiteten Signal über- bzw. unterschritten wird.

Bei einem jeweiligen Über- bzw. Unterschreiten des Schwellenwertes durch ein adaptiertes von den Sensordaten abgeleitetes Signal ist zweckmäßigerweise zumindest eine reversible Sicherheitseinrichtung aktivierbar.

Eine jeweilige Adaption des von den Sensordaten abgeleiteten Signals erfolgt vorzugsweise so, dass eine jeweilige Stufe geringeren Schweregrades zeitlich vor einer jeweiligen Stufe höheren Schweregrades erfasst wird.

Eine jeweilige Adaption des von den Sensordaten abgeleiteten Signals erfolgt zweckmäßigerweise nur dann, wenn die Eigenschaften und/oder der Verlauf des Signals über die adaptive Logik vorgebbaren Kriterien entsprechen.

Bei einer bevorzugten praktischen Ausführungsform des erfindungsgemäßen Überrollerfassungssystems ist wenigstens ein Sensor zur Erfassung der seitlichen und/ oder wenigstens ein Sensor zur Erfassung der vertikalen Beschleunigung des Fahrzeuges vorgesehen. Bevorzugt ist mittels der Steuerschaltung in Abhängigkeit von der seitlichen Beschleunigung und/oder vertikalen Beschleunigung ein Scharfschaltsignal erzeugbar, wobei eine jeweilige Sicherheitseinrichtung nur dann aktivierbar ist, wenn auch das Scharfschaltsignal vorliegt.

Die Steuereinrichtung kann zumindest teilweise durch das Steuergerät des betreffenden Fahrzeuges gebildet sein.

Die Erfindung wird im Folgenden anhand von Ausführungsbeispielen unter Bezugnahme auf die Zeichnung näher erläutert; in dieser zeigen:

Figur 1     eine schematische Übersicht einer beispielhaften Ausführungsform des Überrollerfassungssystems mit einer adaptiven Logik,

Figur 2     ein Diagramm, in dem der Zählwert eines Ratenzählers "RateCounter" über der absoluten Roll- oder Drehrate "abs(Rate)" dargestellt ist,

Figur 3     ein Diagramm, in dem die Beziehung zwischen den Stufen verschiedenen Schweregrades und dem Zählwert des Ratenzählers "RateCounter" über der Zeit dargestellt ist,

Figur 4     ein Diagramm, in dem der Versatz der Drehrate "ShiftedRate" über den Zählwert des Ratenzählers "Rate-Counter" dargestellt ist,

Figur 5     ein Flussdiagramm der adaptiven Logik und

Figur 6     zwei Diagramme, in denen jeweils die Drehrate über dem Drehwinkel dargestellt ist, wobei sich aus dem linken Diagramm die Verhältnisse bei Vorliegen eines adaptierten Signals bzw. einer ersten Stufe, bei der es sich um eine Stufe geringeren Schweregrades handelt, und aus dem rechten Diagramm die Verhältnisse bei Vorliegen des nicht adaptierten ursprünglichen Signals bzw. einer zweiten Stufe ergeben, bei der es sich um eine Stufe höheren Schweregrades handelt.

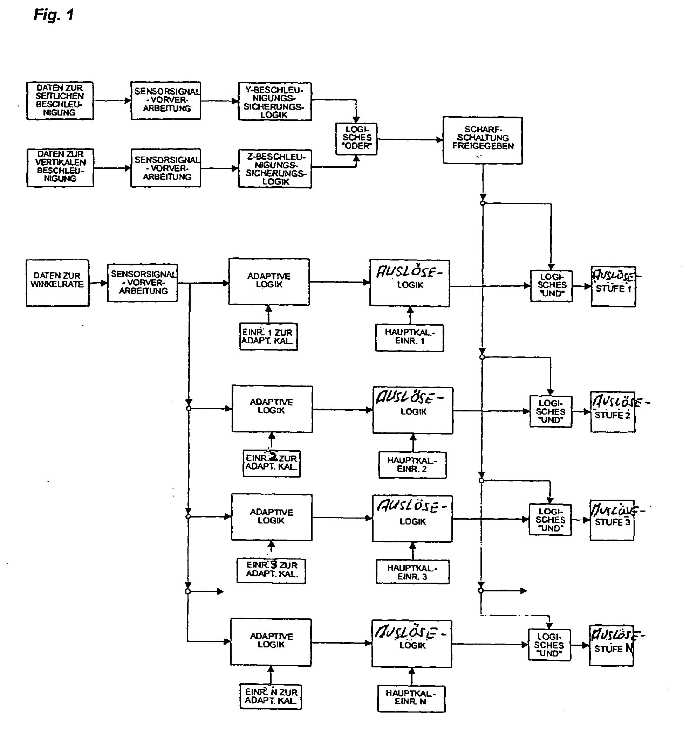

Figur 1 zeigt in schematischer Übersicht eine beispielhafte Ausführungsform eines Überrollerfassungssystems 10 für ein Fahrzeug, insbesondere Kraftfahrzeug.

Das Überrollerfassungssystem 10 umfasst wenigstens einen Sensor zur Erfassung des Roll- oder Drehwinkels des Fahrzeuges und/oder wenigstens einen Drehratensensor, eine mit diesem bzw. diesen Sensoren verbundene elektronische Steuereinrichtung 12 sowie wenigstens eine irreversible und zumindest eine reversible Sicherheitseinrichtung.

Die Steuereinrichtung 12 unterscheidet bei der Erfassung eines jeweiligen Überrollszenarios anhand der Sensordaten zwischen wenigstens einer Stufe geringeren Schweregrades und wenigstens einer Stufe höheren Schweregrades des Überrollszenarios, um im Fall geringeren Schweregrades wenigstens eine reversible Sicherheitseinrichtung und im Fall höheren Schweregrades wenigstens eine irreversible Sicherheitseinrichtung zu aktivieren.

Im vorliegenden Fall unterscheidet die Steuereinrichtung 12 bei der Erfassung eines jeweiligen Überrollszenarios zwischen mehr als zwei, d.h. beispielsweise zwischen einer beliebigen Auswahl N von Stufen unterschiedlichen Schweregrades des Überrollszenarios.

Wie anhand der Figur 1 zu erkennen ist, umfasst die Steuereinrichtung 12 zur Unterscheidung zwischen den Stufen unterschiedlichen Schweregrades eines jeweiligen Überrollszenarios eine adaptive Logik 14.

Zumindest ein von den Sensordaten, insbesondere von Sensordaten bezüglich der Drehrate und/oder des Drehwinkels abgeleitetes Signal ist über die adaptive Logik 14 in Abhängigkeit von bestimmten Eigenschaften und/oder dem Verlauf dieses Signals zumindest bereichsweise abänderbar, um die jeweilige Adaption zu bewirken. Dabei kann das von den Sensordaten abgeleitete Signal insbesondere repräsentativ für den Verlauf der Drehrate in Abhängigkeit vom Drehwinkel sein.

Eine jeweilige Sicherheitseinrichtung ist bevorzugt dann aktivierbar, wenn das von den Sensordaten zum Beispiel bezüglich der Drehrate und/oder des Drehwinkels abgeleitete Signal einen vorgebbaren Schwellenwert über- bzw. unterschreitet. Dabei kann insbesondere ein variabler, von dem jeweiligen Drehwinkel und der jeweiligen Drehrate abhängiger Schwellenwert vorgesehen sein.

Bevorzugt wird eine irreversible Sicherheitseinrichtung jeweils nur dann aktiviert, wenn der Schwellenwert von einem nicht adaptierten von den Sensordaten beispielsweise zur Drehrate und/oder zum Drehwinkel abgeleiteten Signal über- bzw. unterschritten wird. Bei einem jeweiligen Über- bzw. Unterschreiten des Schwellenwertes durch ein adaptiertes von den betreffenden Sensordaten abgeleitetes Signal ist bevorzugt zumindest eine reversible Sicherheitseinrichtung aktivierbar.

Eine jeweilige Adaption des von den betreffenden Sensordaten abgeleiteten Signals kann insbesondere so erfolgen, dass eine jeweilige Stufe geringeren Schweregrades zeitlich vor einer jeweiligen Stufe höheren Schweregrades erfasst wird.

Eine jeweilige Adaption des von den betreffenden Sensordaten abgeleiteten Signals erfolgt zweckmäßigerweise nur dann, wenn die Eigenschaften und/oder der Verlauf des Signals über die adaptive Logik 14 vorgebbaren Kriterien entsprechen.

Im vorliegenden Fall ist überdies wenigstens ein Sensor zur Erfassung der seitlichen und wenigstens ein Sensor zur Erfassung der vertikalen Beschleunigung des Fahrzeuges vorgesehen. Dabei wird mittels der Steuerschaltung 12 in Abhängigkeit von der seitlichen Beschleunigung und/oder der vertikalen Beschleunigung ein Scharfschaltsignal erzeugbar, wobei eine jeweilige Sicherheitseinrichtung nur dann aktivierbar ist, wenn auch das Scharfschaltsignal vorliegt.

Wie anhand der Figur 1 zu erkennen ist, werden beim vorliegenden Ausführungsbeispiel Daten zur Drehrate zunächst einer Sensorsignal-Vorverarbeitung zugeführt. Das Ausgangssignal der Sensorsignal-Vorverarbeitung wird dann den unterschiedlichen Stufen zugeordneten Abschnitten der adaptiven Logik 14 zugeführt. Den verschiedenen Abschnitten der adaptiven Logik 14 ist jeweils eine Einrichtung zur adaptiven Kalibrierung zugeordnet, wobei es sich hier insbesondere auch um einen eigenen Parametersatz handeln kann. Die Ausgangssignale der verschiedenen Abschnitte der adaptiven Logik 14 werden jeweils einer Auslöselogik mit zugeordneter Hauptkalibrierungseinrichtung zugeführt.

Die Ausgangssignale der verschiedenen Auslöselogikschaltungen oder - abschnitte sind jeweils einem logischen "UND"-Element zugeführt, dem überdies das Ausgangssignal eines Scharfschaltungsabschnitts der elektronischen Steuerung 12 zugeführt ist, über den eine Scharfschaltung freigebbar ist. Der Eingang des für eine Freigabe der Scharfschaltung zuständigen Schaltungsabschnitts ist mit einem logischen "ODER"-Element verbunden, das von dem Ausgangssignal einer Y-Beschleunigungs-Sicherungslogik sowie dem Ausgangssignal einer Z-Beschleunigungs-Sicherungslogik beaufschlagt ist. Der Y-Beschleunigungs-Sicherungslogik wird das Ausgangssignal einer Sensorsignal-Vorverarbeitung zugeführt, mittels der Daten bezüglich der seitlichen Beschleunigung des Fahrzeuges einer Vorverarbeitung unterzogen werden. Der Z-Beschleunigungs-Sicherungslogik wird das Ausgangssignal einer Sensorsignal-Vorverarbeitung zugeführt, über die Daten bezüglich der vertikalen Beschleunigung des Fahrzeuges vorverarbeitet werden.

Eine jeweilige Sicherheitseinrichtung ist also nur dann aktivierbar, wenn auch das Scharfschaltsignal vorliegt. Eine Scharfschaltung wird nur dann freigegeben, wenn entweder von der Y-Beschleunigungs-Sicherungslogik oder von der Z-Beschleunigungs-Sicherungslogik ein entsprechendes Signal geliefert wird.

Den verschiedenen logischen "UND"-Elementen ist jeweils eine Auslösestufe nachgeschaltet, über die ggf. eine jeweilige Sicherheitseinrichtung aktivierbar ist.

Es wird also zwischen Stufen unterschiedlichen Schweregrades innerhalb ein und desselben Überrollszenarios unterschieden. Dazu kann beispielsweise eine adaptive Logik 14 vorgesehen sein, die die Eigenschaften und den Verlauf entsprechender Signale berücksichtigt und eine Anpassung der ursprünglichen Signale bewirkt. Dabei können die ursprünglichen Signale in bestimmten Bereichen verformt werden, soweit dies erwünscht ist. Falls die Eigenschaften und der Verlauf der ursprünglichen Signale den Kriterien der adaptiven Logik 14 nicht entsprechen, erfolgt keine Adaption, d.h. die ursprünglichen Signale bleiben unverändert.

Die weitere Definition einer jeweiligen Schweregrad-Stufe ist anwenderspezifisch. Die Reihenfolge der Stufennummerierung (-benennung) kann von Anwendung zu Anwendung unterschiedlich sein, wobei bei bestimmten Anwendungen die Stufe 1 die Stufe mit dem höchsten Schweregrad und in anderen Fällen die Stufe geringsten Schweregrades sein kann. Beim in der Figur 1 wiedergegebenen Ausführungsbeispiel ist die Stufe geringsten Schweregrades als Stufe "1" bezeichnet, während die Stufen höheren Schweregrades als Stufen "2", "3", ... bezeichnet sind.

Grundsätzlich kann eine Anzahl N von Stufen unterschiedlichen Schweregrades vorgesehen sein, wobei in der Praxis drei Stufen ausreichen können.

Im Folgenden wird die adaptive Logik 14 näher erläutert:

Die adaptive Logik 14 arbeitet in der Weise, dass dann, wenn die gemessene Roll- bzw. Drehrate in einem bestimmten Bereich liegt (bekannt als Schweregradstufe), ein initialisierter Zähler aufwärts- oder abwärtszählen kann. Die Anzahl der verschiedenen Stufen kann beliebig gewählt sein und sich von Anwendung zu Anwendung unterscheiden. Auch die Schritte einer jeweiligen Zählwerterhöhung oder -verringerung können von Schweregradstufe zu Schweregradstufe variieren. Diese Unabhängigkeit ermöglicht eine sehr flexible Signaladaption in einem weiten Bereich.

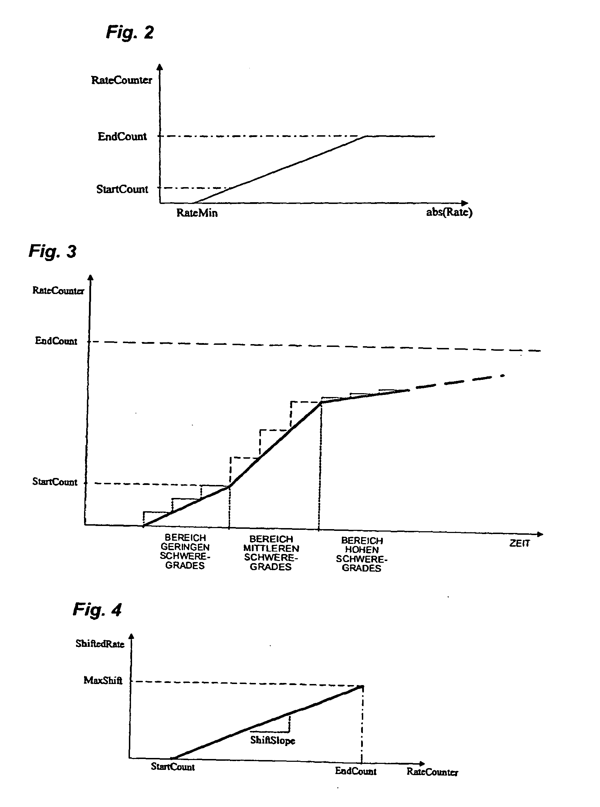

Das Diagramm gemäß Fig. 2 gibt in einfacher schematischer Darstellung die Arbeitsweise der adaptiven Logik 14 wieder. In diesem Diagramm ist der Zählwert eines Ratenzähler "RateCounter" über der absoluten Roll-oder Drehrate "abs(Rate)" dargestellt. Wird eine minimale Drehrate (Rate-Min) überschritten, d.h. die Stufe des geringsten Schweregrades erreicht, so beginnt der Zähler beispielsweise mit dem Aufwärtszählen. Das Aufwärtszählen dauert solange, bis ein maximaler Zählwert erreicht ist. Zu diesem Zeitpunkt wird der Zählwert begrenzt. Dies ist wichtig, um die Adaption zeitlich zu begrenzen. Die Adaption beginnt, sobald der Ratenzählwert "RateCounter" den Anfangszählwert "StartCount" überschritten hat. Der Ratenzählwert "RateCounter" wird also durch einen Endzählwert "EndCount" begrenzt, wenn der Zählwert oberhalb des Endzählwertes "EndCount" liegt.

Dem Diagramm gemäß Figur 3 können detailliertere Informationen bezüglich der das Aufwärts- bzw. Abwärtszählen des Zählers betreffenden Logik entnommen werden. Dabei ergibt sich aus diesem Diagramm insbesondere die Beziehung zwischen den Stufen verschiedenen Schweregrades und dem Zählwert des Ratenzählers (RateCounter) über der Zeit. Es sind drei Stufen unterschiedlichen Schweregrades zu erkennen, deren Zählschritte unabhängig voneinander wählbar sind. Grundsätzlich können auch mehr Stufen unterschiedlichen Schweregrades mit weiteren Zählschritten vorgesehen sein. Falls erforderlich, kann innerhalb der Stufen auch eine Abwärtszählung erfolgen.

Grundsätzlich ist es auch denkbar, dass der Endzählwert "EndCount" aufgrund von lediglich einer oder zwei Schweregradstufen erreicht wird, nachdem diese voneinander unabhängig sind.

Figur 4 zeigt ein Diagramm, in dem der Versatz der Drehrate "ShiftedRate" über dem Zählwert des Ratenzählers "RateCounter" dargestellt ist.

Die Anpassung (Versatz der Drehrate "ShiftedRate") ist eine Funktion des Ratenzählwertes "RateCounter" über der Zeit und abhängig von der maximalen adaptierbaren Rate "MaxShift". Je höher der Ratenzählwert "RateCounter" ist, desto größer ist der Adaptionsbereich. Die Adaption ist begrenzt durch die maximale anpassbare Rate "MaxShift", die in einem geeigneten Bereich gewählt sein sollte.

Der Ratenversatz "ShiftedRate" ergibt sich aus der folgenden Beziehung:

$$\text{ShiftedRate} = [\text{MaxShift}/(\text{EndCount} - \text{StartCount})] \cdot (\text{RateCounter} - \text{StartCount})$$

Bei dem Versatz der Drehrate "ShiftedRate" handelt es sich um den Wert, der ggf. dem ursprünglichen gemessenen Drehratenwert hinzugefügt wird. Er ist das Ergebnis der Verlagerungssteigung multipliziert mit der Differenz zwischen "RateCounter" und "StartCount", wenn "RateCounter" größer ist als "StartCount".

Mit den Parametern Schweregradstufe "SeverityStage", Zählschritt "CountStep", Anfangszählwert "StartCount", Endzählwert "EndCount" und maximaler Verlagerung "MaxShift" ist praktisch jede beliebige Anpassung möglich. Dies ist ein wesentlicher Vorteil der flexiblen und leicht kalibrierbaren adaptiven Logik 14.

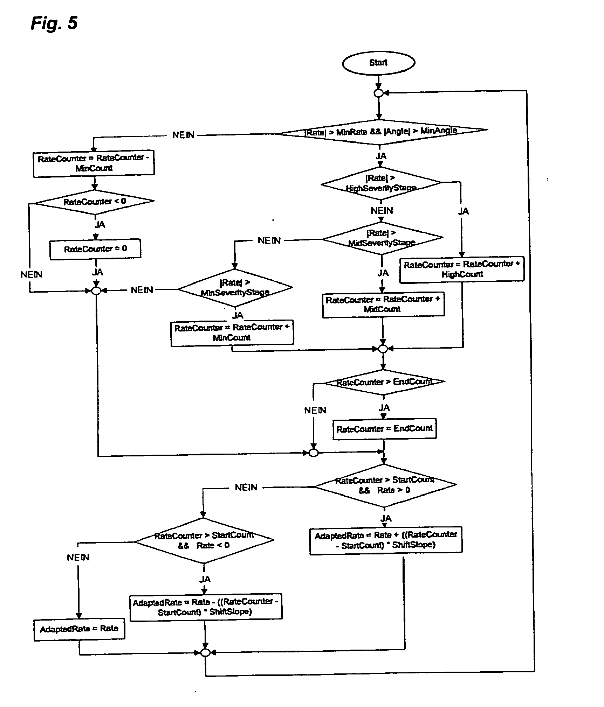

Fig. 5 zeigt ein Flussdiagramm der adaptiven Logik 14. Dabei werden in diesem Flussdiagramm die folgenden Parameter mit berücksichtigt:

Betrag der Drehrate "| Rate |"
Minimale Rate "MinRate"
Betrag des Drehwinkels " | Angle |"
Minimaler Drehwinkel "MinAngle"
Ratenzählwert "RateCounter"

Minimaler Zählwert "MinCount"
Stufe hohen Schweregrades "HighSeverityStage"
Stufen mittleren Schweregrades "MidSeverityStage"
Hoher Zählwert "HighCount"
Stufe des geringsten Schweregrades "MinSeverityStage"
Mittlerer Zählwert "MidCount"
Endzählwert "EndCount"
Anfangszählwert "StartCount"
Angepasste Rate "AdaptedRate"
Drehrate "Rate"
Adaptierte Rate "AdaptedRate"
Versatzsteigung "ShiftSlope"

Zudem ist mit dem im Flussdiagramm verwendeten Zeichen "&&" jeweils ein logisches "UND" symbolisiert.

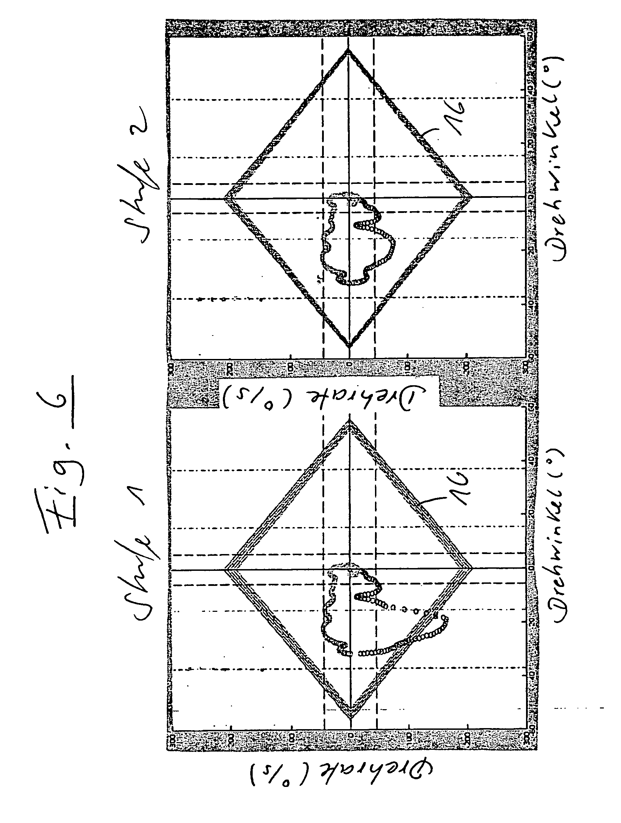

Figur 6 zeigt zwei Diagramme, in denen jeweils die Drehrate über dem Drehwinkel dargestellt ist. Dabei ergeben sich aus dem linken Diagramm die Verhältnisse bei Vorliegen eines adaptierten Signals bzw. einer ersten Stufe, bei der es sich um eine Stufe geringeren Schweregrades handelt. Demgegenüber können dem rechten Diagramm die Verhältnisse bei Vorliegen des nicht adaptierten ursprünglichen Signals bzw. einer zweiten Stufe entnommen werden, bei der es sich um eine Stufe höheren Schweregrades handelt.

Im vorliegenden Fall handelt es sich bei dem betreffenden Überrollerfassungssystem also um Erfassungssystem, bei dem z.B. die Stufe 1 als Stufe eines geringeren Schweregrades und die Stufe 2 als Stufe eines höheren Schweregrades definiert ist.

Die Stufe 1 kann empfindlicher ausgelegt und beispielsweise für eine Überrollerfassung etwa 50 bis 100 msec vor einer Erfassung der Stufe 2 komprimiert sein.

Beim vorliegenden Ausführungsbeispiel ist die adaptive Logik 14 überdies so ausgelegt, dass die Stufe 1 eines betreffenden Überrollszenarios erfasst wird, wenn ein Drehwinkel von etwa 40° bei einer minimalen Drehrate oberhalb etwa 10°/sec erreicht wurde. Für solche Überrollszenarios sollte keine Stufe 2 erfasst werden, da die Situation als "Beinahe-Überrollen" eingestuft werden sollte. Die mehrstufige adaptive Logik 14 wurde hier also an eine beispielsweise zweistufige adaptive Logik mit speziellen Parameterwerten angepasst, die den vorgebbaren zeitlichen Abläufen der Erfassung Rechnung tragen. Dabei wurden beispielsweise die folgenden Parameterwerte gewählt:

"MinRate" = 45°/sec
"MinAngle" = 0°
"StartCount" = 10
"EndCount" = 40
"MaxShift" = 90°/sec
"MinSeverityStage" = 45°/sec
"MidSeverityStage" = 60°/sec
"HighSeverityStage" = 120°/sec
"MinCount" = 1
"MidCount" = 5
"HighCount" = 2

Im vorliegenden Fall wird beispielsweise der Hauptüberrollerfassungsalgorithmus "WinGAMR2" (Windowed Gyroscope Algorithm Measuring Rollover, version 2) verwendet, ergänzt durch die erfindungsgemäße adaptive Logik 14. Grundsätzlich kann die erfindungsgemäße adaptive Logik 14 jedoch auch für beliebige andere Überrollalgorithmen verwendet werden.

Das Verhalten der obigen Anwendung ergibt sich aus den beiden Diagrammen gemäß der Figur 6. Dabei zeigt das linke Diagramm eine adaptierte Drehrate über dem Drehwinkel (Stufe 1). Das rechte Diagramm zeigt die nicht adaptierte Drehrate über dem Drehwinkel (Stufe 2).

Die Vierecke in den beiden Diagrammen geben die jeweiligen Schwellenwerte 16 an, bei deren Über- bzw. Unterschreiten die jeweiligen Sicherheitseinrichtungen aktiviert werden.

Im dargestellten Fall wird die adaptive Stufe 1 geringeren Schweregrades (vgl. das linke Diagramm der Figur 6) erfasst, was die Aktivierung wenigstens einer reversiblen Sicherheitseinrichtung mit sich bringt. Dagegen ist die Stufe 2 (vgl. das rechte Diagramm der Figur 6) nicht adaptiv, was bedeutet, dass die Signalwerte den ursprünglichen Werten entsprechen. Diese Stufe 2 führt im vorliegenden Fall nicht zu einer entsprechenden Überrollerfassung. Eine entsprechende Überrollerfassung erfolgt erst dann, wenn ein jeweiliger Schwellenwert 16 über- bzw. unterschritten wird. Ein jeweiliger Schnittpunkt kann z.B. visuell eingestellt werden.

**Bezugszeichenliste**

10 Überrollerfassungssystem
12 Steuereinrichtung
14 adaptive Logik
16 Schwellenwerte

**Patentansprüche**

1. Überrollerfassungssystem (10) für ein Fahrzeug, mit wenigstens einem Sensor zur Erfassung des Drehwinkels des Fahrzeuges und/oder wenigstens einem Drehratensensor, einer mit den Sensoren verbundenen elektronischen Steuereinrichtung (12) sowie wenigstens einer Sicherheitseinrichtung, die im Fall eines anhand der Sensordaten erfassten Überrollszenarios über die Steuereinrichtung (12) aktivierbar ist,
**dadurch gekennzeichnet,**
**dass** zumindest eine irreversible und zumindest eine reversible Sicherheitseinrichtung vorgesehen ist und dass die Steuereinrichtung (12) bei der Erfassung eines jeweiligen Überrollszenarios anhand der Sensordaten zwischen wenigstens drei Stufen unterschiedlichen Schweregrades des Überrollszenarios unterscheidet, um im Fall einer geringeren Schweregrades wenigstens eine reversible Sicherheitseinrichtung und im Fall eines höheren Schweregrades wenigstens eine irreversible Sicherheitseinrichtung zu aktivieren.

2. Überrollerfassungssystem nach Anspruch 1,
**dadurch gekennzeichnet,**
**dass** die Steuereinrichtung (12) bei der Erfassung eines jeweiligen Überrollszenarios zwischen drei Stufen unterschiedlichen Schweregrades des Überrollszenarios unterscheidet.

3. Überrollerfassungssystem nach einem der vorhergehenden Ansprüche,
**dadurch gekennzeichnet ,**
**dass** die Steuereinrichtung (12) zur Unterscheidung zwischen den Stufen unterschiedlichen Schweregrades eines jeweiligen Überrollszenarios eine adaptive Logik (14) umfasst.

4. Überrollerfassungssystem nach Anspruch 3,
**dadurch gekennzeichnet ,**
**dass** wenigstens ein von den Sensordaten abgeleitetes Signal über die adaptive Logik (14) in Abhängigkeit von bestimmten Eigenschaften und/oder dem Verlauf dieses Signals zumindest bereichsweise abänderbar ist, um die jeweilige Adaption zu bewirken.

5. Überrollerfassungssystem nach Anspruch 4,
**dadurch gekennzeichnet ,**
**dass** das von den Sensordaten abgeleitete Signal repräsentativ für den Verlauf der Drehrate in Abhängigkeit vom Drehwinkel ist.

6. Überrollerfassungssystem nach einem der vorhergehenden Ansprüche,
**dadurch gekennzeichnet ,**
**dass** eine jeweilige Sicherheitseinrichtung aktivierbar ist, wenn das von den Sensordaten abgeleitete Signal einen vorgebbaren Schwellenwert über- bzw. unterschreitet.

7. Überrollerfassungssystem nach Anspruch 6,
**dadurch gekennzeichnet ,**
**dass** ein variabler, von dem jeweiligen Drehwinkel und der jeweiligen Drehrate abhängiger Schwellenwert vorgesehen ist.

8. Überrollerfassungssystem nach einem der vorhergehenden Ansprüche,
**dadurch gekennzeichnet ,**
**dass** eine irreversible Sicherheitseinrichtung jeweils nur dann aktivierbar ist, wenn der Schwellenwert von einem nicht adaptierten von den Sensordaten abgeleiteten Signal über- bzw. unterschritten wird.

**9.** Überrollerfassungssystem nach einem der vorhergehenden Ansprüche,
**dadurch gekennzeichnet ,**
**dass** bei einem jeweiligen Über- bzw. Unterschreiten des Schwellenwertes durch ein adaptiertes von den Sensordaten abgeleitetes Signal zumindest eine reversible Sicherheitseinrichtung aktivierbar ist.

**10.** Überrollerfassungssystem nach einem der vorhergehenden Ansprüche,
**dadurch gekennzeichnet ,**
**dass** eine jeweilige Adaption des von den Sensordaten abgeleiteten Signals so erfolgt, dass eine jeweilige Stufe geringeren Schweregrades zeitlich vor einer jeweiligen Stufe höheren Schweregrades erfasst wird.

**11.** Überrollerfassungssystem nach einem der vorhergehenden Ansprüche,
**dadurch gekennzeichnet ,**
**dass** eine jeweilige Adaption des von den Sensordaten abgeleiteten Signals nur dann erfolgt, wenn die Eigenschaften und/oder der Verlauf des Signals über die adaptive Logik (14) vorgebbaren Kriterien entsprechen.

**12.** Überrollerfassungssystem nach einem der vorhergehenden Ansprüche,
**dadurch gekennzeichnet ,**
**dass** wenigstens ein Sensor zur Erfassung der seitlichen und/oder wenigstens ein Sensor zur Erfassung der vertikalen Beschleunigung des Fahrzeuges vorgesehen ist.

**13.** Überrollerfassungssystem nach Anspruch 12,
**dadurch gekennzeichnet ,**
**dass** mittels der Steuereinrichtung (12) in Abhängigkeit von der seitlichen Beschleunigung und/oder der vertikalen Beschleunigung ein Scharfschaltsignal erzeugbar ist und dass eine jeweilige Sicherheitseinrichtung nur dann aktivierbar ist, wenn auch das Scharfschaltsignal vorliegt.

**14.** Überrollerfassungssystem nach einem der vorhergehenden Ansprüche,
**dadurch gekennzeichnet ,**
**dass** die Steuereinrichtung (12) zumindest teilweise durch das Steuergerät des Fahrzeuges gebildet ist.

**Claims**

**1.** A rollover detection system (10) for a vehicle comprising at least one sensor for the detection of the angle of rotation of the vehicle and/or at least one angular rate sensor, an electronic control device (12) connected to the sensors as well as at least one safety device which can be activated via the control device (12) in the event of a rollover scenario detected with reference to the sensor data,
**characterized in that**
at least one irreversible safety device and at least one reversible safety device are provided; and **in that** the control device (12) distinguishes between at least three stages of different degrees of severity of the rollover scenario in the detection of a respective rollover scenario with reference to the sensor data in order to activate at least one reversible safety device in the case of a lower degree of severity and to activate at least one irreversible safety device in the case of a higher degree of severity.

**2.** A rollover detection system in accordance with claim 1, **characterized in that** the control device (12) distinguishes between three stages of different degrees of severity of the rollover scenario in the detection of a respective rollover scenario.

**3.** A rollover detection system in accordance with any one of the preceding claims, **characterized in that** the control device (12) comprises an adaptive logic system (14) in order to distinguish between the stages of different degrees of severity of a respective rollover scenario.

**4.** A rollover detection system in accordance with claim 3, **characterized in that** at least one signal derived from the sensor data can be changed at least regionally via the adaptive logic system (14) in dependence on specific properties and/or on the development of this signal in order to effect the respective adaptation.

**5.** A rollover detection system in accordance with claim 4, **characterized in that** the signal derived from the sensor data is representative of the development of the angular rate in dependence on the angle of rotation.

6. A rollover detection system in accordance with any one of the preceding claims, **characterized in that** a respective safety device can be activated when the signal derived from the sensor data exceeds or falls below a pre-determinable threshold value.

7. A rollover detection system in accordance with claim 6, **characterized in that** a variable threshold value is provided which is dependent on the respective angle of rotation and on the respective angular rate.

8. A rollover detection system in accordance with any one of the preceding claims, **characterized in that** an irreversible safety device can only be activated when the threshold value is exceeded or is fallen below by a non-adapted signal derived from the sensor data.

9. A rollover detection system in accordance with any one of the preceding claims, **characterized in that** at least one reversible safety device can be activated each time an adapted signal derived from the sensor data exceeds or falls below the threshold value.

10. A rollover detection system in accordance with any one of the preceding claims, **characterized in that** a respective adaptation of the signal derived from the sensor data takes place such that a respective stage of a lower degree of severity is detected prior to a respective stage of a higher degree of severity.

11. A rollover detection system in accordance with any one of the preceding claims, **characterized in that** a respective adaptation of the signal derived from the sensor data only takes place when the properties and/or the development of the signal correspond/corresponds to criteria pre-settable via the adaptive logic system (14)

12. A rollover detection system in accordance with any one of the preceding claims, **characterized in that** at least one sensor is provided for the detection of the lateral acceleration of the vehicle and/or at least one sensor is provided for the detection of the vertical acceleration of the vehicle.

13. A rollover detection system in accordance with claim 12, **characterized in that** an activation signal can be generated by means of the control device (12) in dependence on the lateral acceleration and/or vertical acceleration; and **in that** a respective safety device can only be activated when the activation signal is also present.

14. A rollover detection system in accordance with any one of the preceding claims, **characterized in that** the control device (12) is formed at least partly by the control apparatus of the vehicle.

**Revendications**

1. Système de détection de tonneau (10) pour un véhicule, comportant au moins un capteur de détection de l'angle de rotation du véhicule et/ou au moins un capteur de vitesse de rotation, un dispositif de commande électronique (12) relié aux capteurs ainsi qu'au moins un dispositif de sécurité qui peut être activé par l'intermédiaire du dispositif de commande (12) dans le cas d'un scénario de tonneau, détecté à l'aide des données des capteurs,
**caractérisé**
**en ce qu'**il est prévu au moins un dispositif de sécurité irréversible et au moins un dispositif de sécurité réversible et en ce que le dispositif de commande (12) fait la distinction, lors de la détection de chaque scénario de tonneau à l'aide des données des capteurs, entre au moins trois états différents de gravité du scénario de tonneau, afin d'activer au moins un dispositif de sécurité réversible dans le cas d'un état de gravité faible, et d'activer au moins un dispositif de sécurité irréversible dans le cas d'un état de gravité plus élevé.

2. Système de détection de tonneau selon la revendication 1,
**caractérisé**
**en ce que** lors de la détection de chaque scénario de tonneau, le dispositif de commande (12) fait la distinction entre trois états différents de gravité du scénario de tonneau.

3. Système de détection du capotage selon l'une des revendications précédentes,
**caractérisé**
**en ce que** pour faire la distinction entre les différents états de gravité de chaque scénario de tonneau, le dispositif de commande (12) comprend une logique d'adaptation (14).

**4.** Système de détection de tonneau selon la revendication 3,
**caractérisé**
**en ce qu'**au moins un signal, dérivé des données des capteurs, peut être modifié au moins par zone, au travers de la logique d'adaptation (14), en fonction de propriétés déterminées et/ou de l'allure de ce signal, afin d'effectuer l'adaptation respective.

**5.** Système de détection de tonneau selon la revendication 4,
**caractérisé**
**en ce que** le signal dérivé des données des capteurs est représentatif de l'allure de la vitesse de rotation en fonction de l'angle de rotation.

**6.** Système de détection de tonneau selon l'une des revendications précédentes,
**caractérisé**
**en ce qu'**un dispositif de sécurité respectif peut être activé lorsque le signal dérivé des données des capteurs dépasse au dessus ou en dessous une valeur de seuil qui peut être prédéfinie.

**7.** Système de détection de tonneau selon la revendication 6,
**caractérisé**
**en ce qu'**il comporte une valeur de seuil variable, qui dépend de l'angle de rotation respectif et de la vitesse de rotation respective.

**8.** Système de détection du tonneau selon l'une des revendications précédentes,
**caractérisé**
**en ce qu'**un dispositif de sécurité irréversible ne peut être activé que si la valeur de seuil est dépassée au dessus ou en dessous par un signal non adapté, dérivé des données des capteurs.

**9.** Système de détection de tonneau selon l'une des revendications précédentes,
**caractérisé**
**en ce que** dans le cas de chaque dépassement au dessus ou en dessous de la valeur de seuil par un signal adapté, dérivé des données des capteurs, au moins un dispositif de sécurité irréversible peut être activé.

**10.** Système de détection de tonneau selon l'une des revendications précédentes,
**caractérisé**
**en ce que** chaque adaptation du signal dérivé des données des capteurs s'effectue de manière qu'un état respectif de moindre gravité soit détecté à temps avant un état respectif de gravité supérieure.

**11.** Système de détection de tonneau selon l'une des revendications précédentes,
**caractérisé**
**en ce que** chaque adaptation du signal dérivé des données des capteurs ne s'effectue que si les propriétés et/ou l'allure du signal correspondent à des critères qui peuvent être prédéfinis par l'intermédiaire de la logique d'adaptation (14).

**12.** Système de détection de tonneau selon l'une des revendications précédentes,
**caractérisé**
**en ce qu'**il est pourvu d'au moins un capteur pour détecter l'accélération latérale et/ou d'au moins un capteur pour détecter l'accélération verticale du véhicule.

**13.** Système de détection de tonneau selon la revendication 12,
**caractérisé**
**en ce qu'**un signal de mise en vigilance peut être produit au moyen du dispositif de commande (12) en fonction de l'accélération latérale et/ou de l'accélération verticale, et en ce qu'un dispositif de sécurité respectif ne peut être activé qu'en présence du signal de mise en vigilance.

**14.** Système de détection de tonneau selon l'une des revendications précédentes,
**caractérisé**
**en ce que** le dispositif de commande (12) est formé au moins en partie par l'appareil de commande du véhicule.

EP 1 614 588 B1

Fig. 1

11

## Fig. 2

RateCounter

EndCount

StartCount

RateMin                                    abs(Rate)

## Fig. 3

RateCounter

EndCount

StartCount

BEREICH
GERINGEN
SCHWERE-
GRADES

BEREICH
MITTLEREN
SCHWERE-
GRADES

BEREICH
HOHEN
SCHWERE-
GRADES

ZEIT

## Fig. 4

ShiftedRate

MaxShift

ShiftSlope

StartCount                    EndCount    RateCounter

## Fig. 5

Fig. 6